# DEMANDE DE BREVET EUROPEEN

(11) **EP 3 026 789 A1**
(43) Date de publication de la demande: **01.06.2016**
(21) Numéro de dépôt: 15195799.0
(22) Date de dépôt: 23.11.2015
(51) Int. Cl.: H02K 1/04, H02K 3/30, H02K 3/34, H02K 5/14, H02K 7/20, H02K 15/09, H02K 15/12, H02K 13/00, H02K 13/04, H02K 23/26, H02K 1/26, H02K 3/02, H02K 3/12, H02K 3/38, H02K 7/00, H02K 15/02

(54) **ROTOR DE DÉMARREUR POUR VÉHICULE AUTOMOBILE MUNI D'UNE COUCHE DE PROTECTION SUR LE TALON**

(30) Priorité: 27.11.2014 FR 1461597
(71) Demandeur: VALEO EQUIPEMENTS ELECTRIQUES MOTEUR, 94046 Créteil Cedex (FR)
(72) Inventeur: METRAL, Jean Sébastien, 38290 LA VERPILLIERE (FR); BERTHOD, Céline, 01120 MONTLUEL (FR); LABBE, Nicolas, 69003 LYON (FR); VIGY, Gauthier, 69007 LYON (FR)
(74) Mandataire: Vaufleury, Guillaume

(57) **Abrégé**

L'invention porte principalement sur un rotor (10) de démarreur pour véhicule automobile comprenant un collecteur (19), ledit collecteur (19) comprenant:
des lames conductrices (20) aptes à coopérer avec des balais, chacune desdites lames conductrices (20) comprenant un retour de lame (22) d'orientation radiale, chaque retour de lame (22) comprenant une encoche (25) dans laquelle est positionnée une extrémité d'au moins un fil (13) de bobinage dudit rotor (10) de manière à être en contact avec ladite lame conductrice (20), l'ensemble des retours de lame formant un talon (28),
dans lequel une face radiale du talon (28) destinée à être tournée vers les balais est recouverte d'une couche de protection (29).

## Description

La présente invention porte un rotor de démarreur pour véhicule automobile muni d'une couche de protection sur le talon.

On connaît des démarreurs pour véhicule automobile munis d'un stator, ou inducteur, comportant plusieurs aimants permanents ou des pôles bobinés (électroaimants) et d'un rotor, ou induit, doté d'un corps de forme cylindrique et d'un bobinage formé par des fils conducteurs. Un entrefer existe entre la périphérie externe du corps du rotor et la périphérie interne du stator.

De façon connue en soi, le corps du rotor consistant en un paquet de tôles présente des encoches longitudinales. Pour former le bobinage, des fils conducteurs en forme d'épingle sont enfilés à l'intérieur des encoches généralement sur deux couches distinctes.

Le rotor comporte en outre un collecteur muni de lames électriquement conductrices qui s'étendent côte à côte sur la périphérie externe d'un support réalisé en matériau plastique. Ces lames conductrices sont destinées à coopérer avec des balais du moteur électrique.

Chacune des lames comprend un retour de lame radial ayant une encoche dans laquelle deux extrémités des fils du bobinage sont positionnées pour être en contact avec la lame correspondante. La liaison entre la lame et les fils est généralement effectuée par soudage.

Afin d'éviter que les balais puissent entrer en contact avec le talon formé par l'ensemble des retours de lames, le talon est usiné après l'étape d'imprégnation du bobinage. On garantit ainsi la présence d'un jeu fonctionnel entre le talon et les balais.

Une étude du procédé d'assemblage des fils sur le collecteur a mis en évidence un risque important de corrosion de la liaison entre les retours lame et les extrémités des fils de bobinage susceptible d'engendrer une fragilité mécanique et une augmentation de résistance électrique, voire une isolation électrique au niveau des connexions. Ce risque est d'autant plus important dans le cas d'une atmosphère saline.

L'invention vise à remédier efficacement à cet inconvénient en proposant un rotor de démarreur pour véhicule automobile comprenant un collecteur, ledit collecteur comprenant :
des lames conductrices aptes à coopérer avec des balais, chacune desdites lames conductrices comprenant un retour de lame d'orientation radiale, chaque retour de lame comprenant une encoche dans laquelle est positionnée une extrémité d'au moins un fil de bobinage dudit rotor de manière à être en contact avec ladite lame conductrice, l'ensemble des retours de lame formant un talon,
dans lequel une face radiale dudit talon destinée à être tournée vers les balais est recouverte d'une couche de protection.

L'invention permet ainsi de protéger localement la liaison entre les fils du bobinage et les lames conductrices par une couche de protection. Cette couche de protection est obtenue par un dépôt de vernis ou tout autre matériau de protection équivalent sur la face radiale du talon qui n'est pas protégée par le vernis d'imprégnation du bobinage compte tenu de l'étape d'usinage permettant de garantir le jeu fonctionnel.

Selon une réalisation, l'au moins un fil de bobinage dudit rotor est réalisé en aluminium.

Selon une réalisation, lesdites lames conductrices sont réalisées en cuivre.

Selon une réalisation, l'au moins un fil de bobinage dudit rotor comprend de l'aluminium, lesdites lames conductrices sont réalisées en cuivre et en ce que de l'aluminium de l'au moins un fil de bobinage et du cuivre des lames conductrices sont directement en contact l'un avec l'autre.

Selon une réalisation, les extrémités de deux fils de bobinage sont positionnées dans une encoche de chaque retour de lame.

Selon une réalisation, l'au moins un fil de bobinage est retenu dans ladite encoche par poinçonnage.

Selon une autre réalisation que la précédente, l'au moins un fil est retenu dans ladite encoche par de la matière du retour de lame qui ferme l'encoche.

Selon une réalisation, l'au moins un fil de bobinage est retenu dans ladite encoche par de la matière du retour de lame qui ferme ladite encoche.

Selon une réalisation, ladite couche de protection est une couche de vernis.

Selon une réalisation, ladite couche de vernis est à base de résine époxy.

L'invention a également pour objet un démarreur pour véhicule automobile équipé d'un rotor tel que un ou des modes de réalisation seul ou combiné précédemment défini.

L'invention a également pour objet un moteur électrique, notamment pour véhicule électrique comprenant un rotor tel que un ou des modes de réalisations seul ou en combinaison décrit précédemment.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en perspective d'un rotor de démarreur selon la présente invention;
La figure 2 est une vue de côté du rotor de démarreur selon la présente invention;
La figure 3 est une vue en coupe longitudinale du rotor de démarreur selon la présente invention;
La figure 4 est une représentation schématique des deux couches des fils conducteurs positionnés à l'intérieur des encoches du corps du rotor.

Les éléments identiques, similaires ou analogues conservent les mêmes références d'une figure à l'autre.

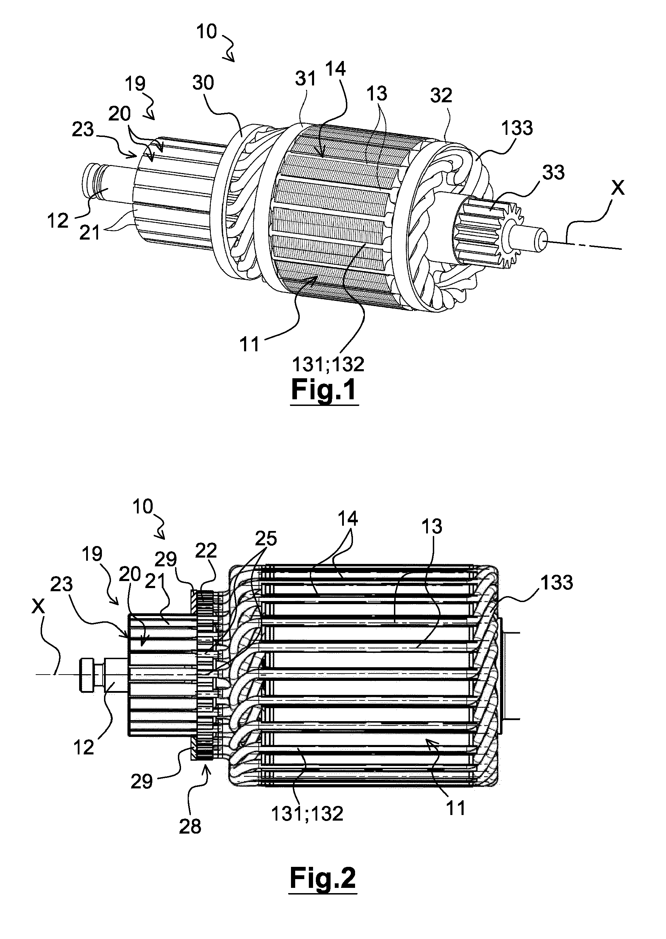

Les figures 1 à 3 montrent un rotor 10 d'axe X comportant un corps 11 monté sur un arbre 12. Ce corps 11 en forme de paquet de tôles feuilletées présente une périphérie externe de forme cylindrique. Des encoches 14 sont ménagées longitudinalement à la périphérie externe du corps 11. Pour former le bobinage, un ensemble de fils conducteurs 13 sont enfilés à l'intérieur de ces encoches 14.

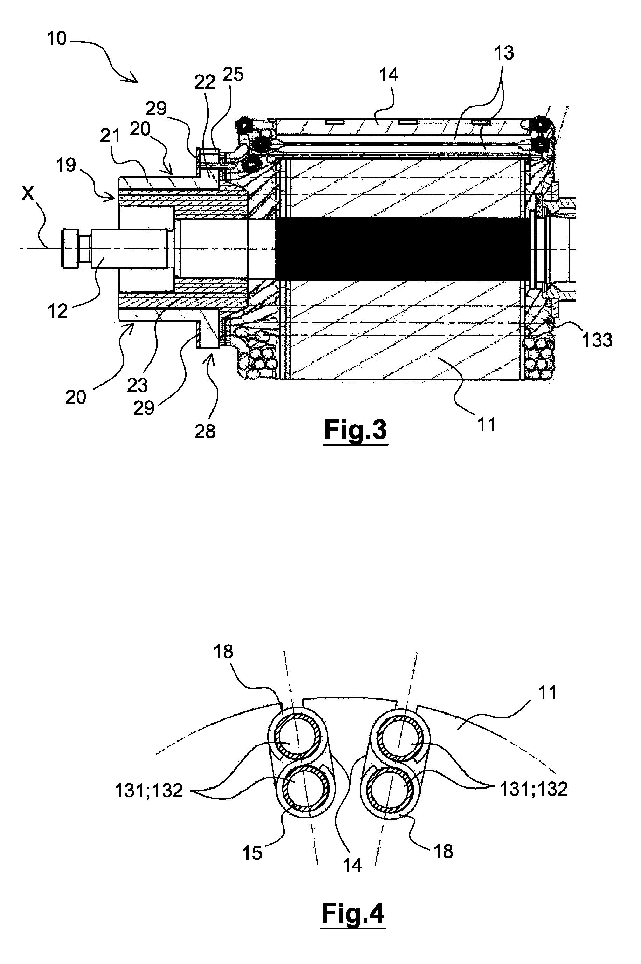

Plus précisément, chaque fil 13 est ici revêtu d'une couche électriquement isolante 15, telle que de l'émail, et présente deux branches 131, 132 reliées par un fond 133 de manière à former un U. Comme cela est visible sur la figure 4, les fils 13 sont enfilés à l'intérieur des encoches 14 sur deux couches distinctes : la couche supérieure et la couche inférieure. Si une des branches 131, 132 est positionnée dans la couche inférieure alors l'autre branche 131, 132 se situe dans la couche supérieure et inversement. La section des fils 13 peut être ronde, carrée, ou rectangulaire. Les parties des fils 13 s'étendant en saillie par rapport aux faces d'extrémités du corps 11 du rotor 10 forment les chignons du bobinage.

Un isolant d'encoche 18 est positionné autour des branches 131, 132 des fils conducteurs 13. En l'occurrence, cet isolant 18 présente une section en forme de S. Cet isolant 18 permet de ne pas blesser les conducteurs lors de leur montage dans le corps 11 formé par le paquet de tôles du rotor 10 doté par définition de bavures. Cela isole également électriquement les fils conducteurs 13 par rapport au paquet de tôles relié à la masse via le carter du démarreur. En outre, le jeu entre l'isolant 18 et les bords des encoches 14 est comblé par un vernis d'imprégnation.

Le rotor 10 comporte en outre un collecteur 19 muni de lames 20 électriquement conductrices qui s'étendent côte à côte sur une périphérie externe d'un support 23 électriquement isolant bien visible sur la figure 3. Ces lames conductrices 20 comportent chacune une portion 21 s'étendant sensiblement longitudinalement suivant l'axe X du rotor 10 apte à coopérer avec des balais du moteur électrique (non représentés) ainsi qu'un retour de lame 22 ayant une orientation radiale par rapport à l'axe X du rotor.

Chaque retour de lame 22 comprend une encoche 25 dans laquelle deux extrémités des fils 13 du bobinage du rotor 10 sont positionnées pour être en contact avec la lame conductrice 20 correspondante. Les extrémités des fils 13 positionnées à l'intérieur des encoches 25 sont constituées par les extrémités libres des branches 131, 132. L'ensemble des retours de lames 22 forme le talon 28 du collecteur 19.

Les liaisons électriques entre les fils 13 et les retours de lame 22 sont de préférence réalisées par un procédé dit de "hot stacking" en anglais consistant à chauffer le talon 28 au moyen d'une électrode de manière à faire fondre un bord des retours de lame 22 après insertion des fils 13 dans les encoches 25. Les fils 13 sont alors retenus dans chaque encoche 25 par de la matière du retour de lame 22 qui ferme l'encoche 25. Alternativement, les fils 13 sont retenus dans l'encoche 25 par poinçonnage.

Suite à l'étape d'usinage du talon 28 réalisée après l'étape d'imprégnation du bobinage, la face radiale du talon 28 tournée vers les balais est recouverte d'une couche de protection 29. La couche de protection 29 est de préférence une couche de vernis à base de résine époxy applicable à chaud qui se rigidifie au cours de sa polymérisation. Toutefois, tout autre matériau permettant la protection de la face radiale du talon 28 contre la corrosion pourra être utilisé.

Dans un exemple de réalisation préférentiel, les lames 20 sont réalisées en cuivre tandis que les fils 13 du bobinage sont réalisés en aluminium. Dans une telle configuration, le couplage entre le cuivre et l'aluminium augmente le risque de corrosion, ce qui renforce l'intérêt du dépôt de la couche de protection 29. Il est à noter que le reste des liaisons électriques entre les fils 13 et les retours de lame 22 (le diamètre extérieur et la face opposée du talon 28 tournée vers le bobinage), sont déjà protégées par le vernis déposé lors de l'étape d'imprégnation du bobinage.

Le support 23 du collecteur 19 solidaire de l'arbre est, pour une bonne tenue en température, en matière plastique thermodurcissable, telle qu'une matière plastique phénolique thermodurcissable par exemple de la bakélite.

Afin d'assurer une retenue radiale des fils conducteurs 13 pour éviter que les effets de la force centrifuge s'exercent sur les liaisons entre les extrémités des fils conducteurs 13 et les lames conductrices 20 ainsi que sur les chignons du bobinage, des frettes 30, 31, 32 en matière électriquement isolante, bien visible sur la figure 1, sont montées serrées autour des liaisons électriques et des chignons du bobinage situés de part et d'autre du corps du rotor 11.

Le rotor 10 pourra comporter en outre à une extrémité de son arbre 12 une roue d'engrenage 33 située du côté opposé du collecteur 19 et destinée à former un planétaire dans un système de réduction de vitesse à train épicycloïdal d'un démarreur, comme décrit par exemple dans le document FR2787833.

En variante, on positionne un seul fil 13 de bobinage par encoche 25.

L'invention a également pour objet le démarreur équipé du rotor 10 précédemment décrit.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Rotor (10) notamment de démarreur pour véhicule automobile comprenant un collecteur (19), ledit collecteur (19) comprenant :
des lames conductrices (20) aptes à coopérer avec des balais, chacune desdites lames conductrices (20) comprenant un retour de lame (22) d'orientation radiale, chaque retour de lame (22) comprenant une encoche (25) dans laquelle est positionnée une extrémité d'au moins un fil (13) de bobinage dudit rotor (10) de manière à être en contact avec ladite lame conductrice (20), l'ensemble des retours de lame formant un talon (28),
dans lequel une face radiale dudit talon (28) destinée à être tournée vers les balais est recouverte d'une couche de protection (29).

2. Rotor selon la revendication 1, dans lequel l'au moins un fil (13) de bobinage dudit rotor (10) est réalisé en aluminium.

3. Rotor selon la revendication 1 ou 2, dans lequel lesdites lames conductrices (20) sont réalisées en cuivre.

4. Rotor selon l'une quelconque des revendications 1 à 3, dans lequel les extrémités de deux fils (13) de bobinage sont positionnées dans une encoche (25) de chaque retour de lame (22).

5. Rotor selon l'une quelconque des revendications 1 à 4, dans lequel l'au moins un fil de bobinage (13) est retenu dans ladite encoche (25) par poinçonnage.

6. Rotor selon l'une quelconque des revendications 1 à 4, dans lequel l'au moins un fil de bobinage (13) est retenu dans ladite encoche (25) par de la matière du retour de lame (22) qui ferme ladite encoche (25).

7. Rotor selon l'une quelconque des revendications 1 à 6, dans lequel ladite couche de protection (29) est une couche de vernis.

8. Rotor selon la revendication 7, dans lequel ladite couche de vernis est à base de résine époxy.

9. Rotor selon l'une des revendications précédentes, dans lequel l'au moins un fil de bobinage dudit rotor comprend de l'aluminium, lesdites lames conductrices sont réalisées en cuivre et en ce que de l'aluminium de l'au moins un fil de bobinage et du cuivre des lames conductrices sont directement en contact l'un avec l'autre.

10. Démarreur pour véhicule automobile équipé d'un rotor (10) tel que défini selon l'une quelconque des revendications précédentes.

11. Moteur électrique comprenant un rotor tel que défini selon l'une quelconque des revendications 1 à 9.
